(19) Europäisches Patentamt
European Patent Office
Office européen des brevets

(11) EP 0 749 991 B1

(12) EUROPEAN PATENT SPECIFICATION

(45) Date of publication and mention of the grant of the patent:
**23.10.2002 Bulletin 2002/43**

(51) Int Cl.[7]: **C08F 292/00**, G03G 9/08, C08L 51/10, G03G 9/087, G03G 9/09

(21) Application number: **96304606.5**

(22) Date of filing: **21.06.1996**

(54) **Method for production of carbon black graft polymer**

Verfahren zur Herstellung von Russpfropfpolymer

Procédé de production de polymère de greffage au noir de carbone

(84) Designated Contracting States:
**CH DE FR GB LI**

(30) Priority: **21.06.1995 JP 15479195**

(43) Date of publication of application:
**27.12.1996 Bulletin 1996/52**

(73) Proprietor: **NIPPON SHOKUBAI CO., LTD.**
**Chuo-ku, Osaka-shi, Osaka-fu 541 (JP)**

(72) Inventors:
- **Ikeda, Hayato**
  **Mino-shi, Osaka 567 (JP)**
- **Ando, Nobuyuki**
  **Tenri-shi, Nara 632 (JP)**
- **Urashima, Nobuaki**
  **Kashihara-shi, Nara 634 (JP)**
- **Uehara, Keiichi**
  **Sanda-shi, Hyogo 669-13 (JP)**
- **Mori, Yoshikuni**
  **Takatsuki-shi, Osaka 569 (JP)**

(74) Representative: **Bassil, Nicholas Charles et al**
**Kilburn & Strode**
**20 Red Lion Street**
**London WC1R 4PJ (GB)**

(56) References cited:
**EP-A- 0 272 127**
**EP-A- 0 289 624**
**US-A- 3 623 986**

Remarks:
The file contains technical information submitted after the application was filed and not included in this specification

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 749 991 B1

## Description

This invention relates to a method for the production of a carbon black graft polymer. More particularly, this invention relates to a technique for continuously producing a carbon black graft polymer with great operational efficiency by causing a polymer containing an epoxy group or a thioepoxy group to react with carbon black.

Prior Art:

Since carbon black is excellent in such characteristics as coloring property, electroconductivity, weatherability, and chemical resistance, it has been finding extensive utility for various applications such as, for example, coloring agents for various products including an electrophotographic toner, reinforcing agents for plastics and elastomers, and fillers. Carbon black, however, is rarely used independently because it comes in a powdery state or a granular state. Generally, it manifests the characteristics thereof as uniformly dispersed in a solid basis such as rubber or resin or in a liquid such as water or a solvent.

Since carbon black has a weak affinity for other substances such as, for example, organic macromolecular substances, water, and organic solvents as compared with the cohesive force between particles, however, it incurs extreme difficulty in being mixed or dispersed uniformly under normal mixing or dispersing conditions.

To solve this problem, numerous studies are under way in search of a method for enabling carbon black to be uniformly mixed or dispersed by coating the surface of carbon black with a varying surfactant or resin and thereby heightening the affinity of carbon black for a solid or liquid basis.

Among other prospective products of these studies, carbon black graft polymers which are obtained by polymerizing polymerizable monomers in the presence of carbon black have come to attract attention in recent years because they can be produced with the hydrophilicity and/or oleophilicity thereof varied by suitably selecting the kind of a polymerizing monomer.

Methods for producing carbon graft polymers are disclosed in JP-B-42-22047, JP-B-44-3826, JP-B-45-17284, and USP No. 3557040, for example. These methods produce the relevant carbon black graft polymers only with low yields ranging from several % to ten plus odd %. Most of attachments to the carbon black within these carbon black graft polymers are in the form of vinyl type homopolymers and prove extremely inferior in terms of the efficiency of the surface treatment effected on carbon black. They consequently fail to manifest as highly enhanced affinity for other substances as expected and often suffer the constancy of the state of dispersion to be notably affected by the mixing or dispersing condition.

JP-B-06-27269 discloses a method for producing a carbon black graft polymer by the reaction of carbon black with a polymer containing one or two epoxy groups and/or thioepoxy groups in the molecular unit which is effected by stirring and mixing them at a temperature in the range of 50 ~ 250°C. This method produces a carbon black graft polymer manifesting excellent dispersibility in various substances because the epoxy groups and/or thioepoxy groups existing in the molecular unit of the polymer react with the surface functional group of carbon black with very high efficiency.

EP-A-272 127 discloses a carbon black graft polymer which is produced by reacting a polymer with an epoxy group and/or a thio epoxy group with carbon black.

When an effort is made to exalt the productivity of this method in the formation of the carbon black graft polymer by employing a continuous kneading device and enabling the reactants of the aforementioned reaction, i.e. carbon black and the polymer containing one or two epoxy groups and/or thioepoxy groups in the molecular unit thereof; to be thoroughly stirred enough for this reaction to be accelerated, it is found that the amounts of the reactants to be processed increases and the time spent for the continuous operation of the device elongates possibly to the extent of suffering the polymer to form a gel in the device and impeding efficient production of the carbon black graft polymer.

An object of this invention is to provide a method for the production of an improved carbon black polymer. Another object of this invention is to provide a method for the production of a carbon black polymer having high commercial serviceability. It is a further object of this invention to provide a method capable of efficiently and continuously producing a carbon black graft polymer by the reaction of carbon black and a polymer containing an epoxy group or a thioepoxy group.

We, the present inventors continued a diligent study with a view to attaining stable production of a carbon black graft polymer by the reaction of carbon black and a polymer (A) having an epoxy group and/or a thioepoxy group. We have consequently acquired a knowledge that when the polymer (A) having an epoxy group and/or a thioepoxy group has been produced by using a peroxide type polymerization initiator in a relatively large amount during the course of polymerization, the reaction of this polymer with carbon black, if effected by the use of a continuous kneading device, permits continuous production of the carbon black graft polymer stably without entraining problems such as inducing gelation of the polymer within the device and the produced carbon black graft polymer enjoys very satisfactory characteristics.

We further made a diligent study on the basis of this knowledge. We have consequently formed a theory that the stable production of the carbon black graft polymer is attained because the polymerization initiator added to the polymerization reaction system during the production of the polymer (A) not only serves as a polymerization initiating seed for promoting the polymerization but also probably undergoes a decomposition and induces the occurrence of an acid in the form of monocarboxylic acid, the carboxyl group, i.e., epoxy- or thioepoxy-reactive group (hereinafter simply called as epoxy-reactive group) of this acid moderately consumes the epoxy group and/or the thioepoxy group introduced into the polymer (A) for the sake of reaction with the carbon black and also persists in the polymer (A) until after the polymerization is ultimately terminated, and this epoxy-reactive group functions as a proper reagent for precluding gelation during the stirring of the polymer (A) and the carbon black and prevents the polymer from undergoing an unnecessary reaction with the carbon black. When we tested this theory by giving a treatment for addition of carboxylic acid (benzoic acid) to other polymer which was suffered to form a gel when mixed with carbon black in the continuous kneading device and then continuing the operation of the device again, we found that the continuous operation could be obtained as satisfactorily as when the operation was performed on the polymer produced by the polymerization carried out in the presence of an excess amount of the peroxide.

From the results of these studies, we have drawn a conclusion that in the production of a carbon black graft polymer by the reaction of carbon black and the polymer (A) having an epoxy group and/or a thioepoxy group by means of a continuous kneading device, it is highly effective for the sake of stabilizing the operation of the device to use such a polymer (A) as allows the effective pendant number ($P_{eff}$) defined by the relation between the average number of epoxy groups or thioepoxy groups contained per molecule of the polymer and the epoxy-reactive group to fall within a prescribed range. This invention has been perfected as a result.

Specifically, the present invention which accomplishes the objects mentioned above resides in a method for the production of a carboy black graft polymer by the reaction of carbon black and a polymer (A) having an epoxy group and/or a thioepoxy group, which method is characterized by the fact that the reaction of carbon black and the polymer (A) is carried out by means of a continuous kneading device and the polymer (A) fed to the continuous kneading device is in such a state that the effective pendant number ($P_{eff}$) represented by the following formula falls in the range of 0.5 ~ 1.3 per molecule

$$P_{eff} = Mn/(E - Ac)$$

(wherein Mn represents the number average molecular weight of the polymer (A), E the number of mols of the epoxy group and/or thioepoxy group per g of the polymer (A), and Ac the number of mols of the epoxy-reactive group per g of the polymer (A)).

The method according to this invention enables a product of constant quality to be obtained stably with high safety without entraining inconveniences such as suffering the raw material fed into the continuous kneading device to form gel and, therefore, enjoys high commercial serviceability.

Now, this invention will be described more specifically below with reference to modes of embodiment.

The carbon black to be used for the method of production according to this invention is only required to have on the surface thereof a carboxyl group and/or a hydroxyl group as the functional group. As concrete examples of the carbon black of this description, furnace black, channel black, acetylene black, and lamp black may be cited. The products of these species of carbon black which are commercially available may be used in their unmodified form. If a given carbon black has an unduly high pH value, the reactivity of this carbon black with the epoxy group or the thioepoxy group of the polymer (A) will be degraded proportionately. Appropriately, therefore, the pH value of the carbon black is not more than 5, preferably not more than 4. The test of the carbon black for the pH value is performed by the method which is defined in JIS (Japanese Industrial Standard) K 6211.

As concrete examples of the polymer (A) which manifests reactivity to the carbon black described above, vinyl type polymers, polyesters, and polyethers which have at least either of such reactive groups as epoxy group and thioepoxy group may be cited.

As concrete examples of the method for obtaining the polymer (A) of this description,

(1) A method which comprises polymerizing a polymerizable monomer having the reactive group mentioned above in the molecular unit thereof (hereinafter referred to as "monomer a"), when necessary, in combination with other polymerizable monomer (hereinafter referred to as "monomer b"),

(2) A method which comprises causing a compound having the reactive group in the molecular unit thereof (hereinafter referred to as "compound c") to react with a polymer having a group capable of reacting with the compound c (hereinafter referred to as "polymer d") and thereby effecting the introduction of the reactive group into the polymer d, and

(3) A method which comprises converting a polymer having a reactive group other than the reactive group mentioned above in the molecular unit thereof (hereinafter referred to as "polymer e") into a polymer (A) having the reactive group mentioned above by a technique known to the art may be cited. Among other methods cited above, the method of (1) proves particularly appropriate.

As concrete examples of the monomer a which is usable for the method of (1) mentioned above, such epoxy group-containing polymerizable monomers as are represented by the following formulas:

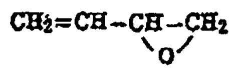

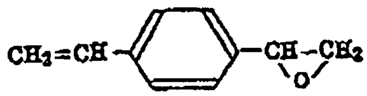

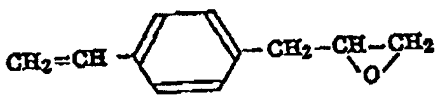

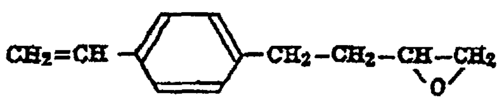

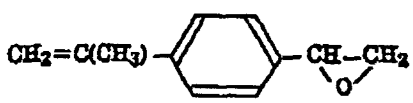

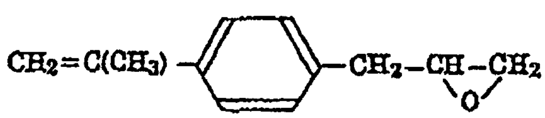

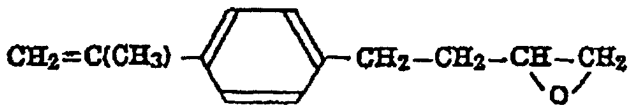

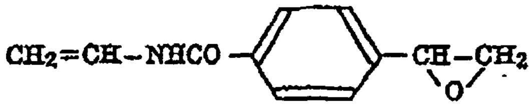

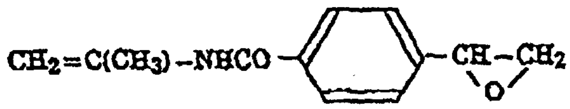

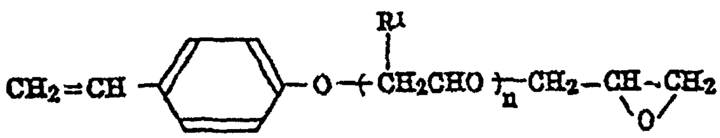

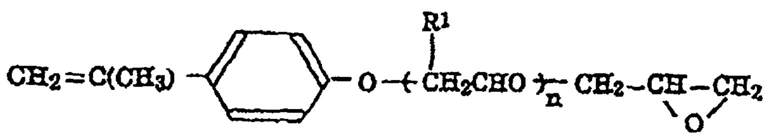

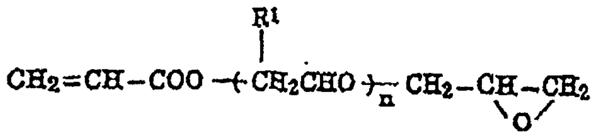

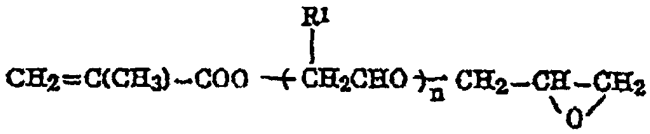

(wherein $R^1$ represent a hydrogen atom or a methyl group and n either 0 or an integer in the range of 1 ~ 20) and such thioepoxy group-containing polymerizable monomers as are represented by the following formulas

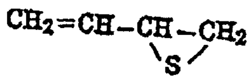

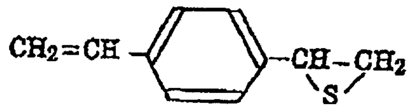

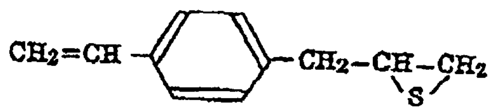

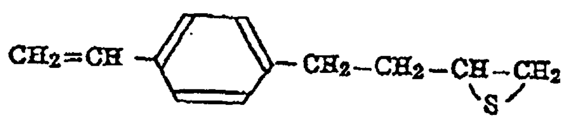

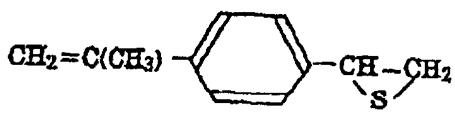

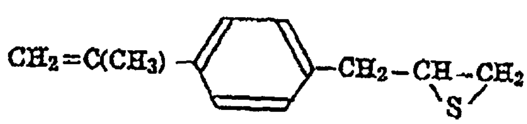

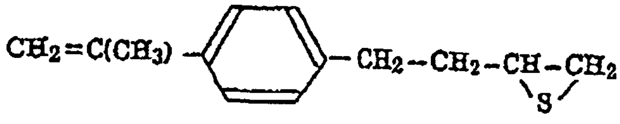

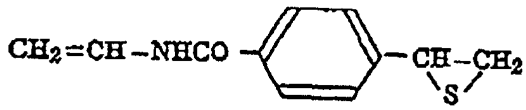

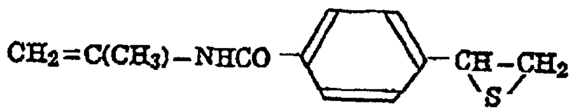

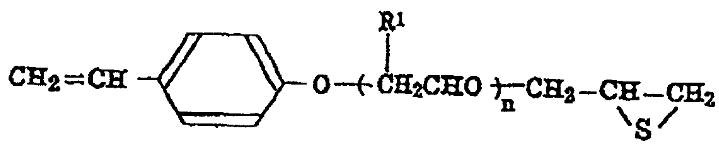

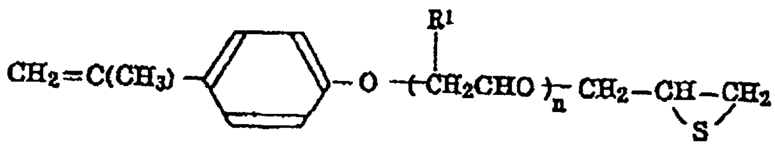

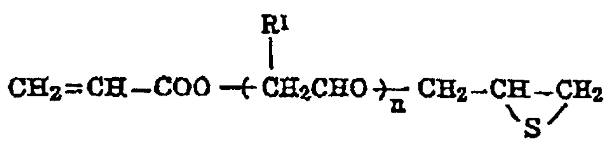

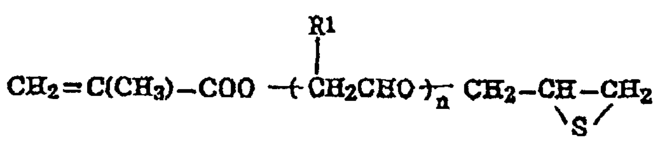

(wherein $R^1$ and n have the same meanings as defined above with reference to the epoxy group-containing polymerizable monomers) may be cited. The monomers enumerated above may be used either single or in the form of a mixture of two or more members.

The monomer b which is optionally used for the method of (1) is required exclusively to be capable of copolymerizing with the monomer a. As concrete examples of the monomer b which answers this description, styrene type monomers such as styrene, o-methyl styrene, m-methyl styrene, p-methyl styrene, $\alpha$-methyl styrene, p-methoxy styrene, p-tert-butyl styrene, p-phenyl styrene, o-chlorostyrene, m-chlorostyrene, and p-chlorosteyrene; acrylic acid or methacrylic acid type monomers such as acrylic acid, methyl acrylate, ethyl acrylate, propyl acrylate, n-butyl acrylate, isobutyl acrylate, dodecyl acrylate, stearyl acrylate, 2-ethylhexyl acrylate, methacrylic acid, methyl methacrylate, ethyl methacrylate, propyl methacrylate, n-butyl methacrylate, isobutyl methacrylate, n-octyl methacrylate, dodecyl methacrylate, 2-ethy-lhexyl methacrylate, and stearyl methacrylate; and ethylene, propylene, butylene, vinyl chloride, vinyl acetate, acryloni-trile, acryl amide, methacryl amide, and N-vinyl pyrrolidone may be cited. These monomers may be

used either singly or in the form of a mixture of two or more members.

For the purpose of producing the polymer (A) having the reactive group by the method of (1), it suffices to polymerize the monomer a, where necessary, in combination with the monomer b by any of the known methods of polymerization such as, for example, bulk polymerization method, suspension polymerization method, emulsion polymerization method, precipitation polymerization method, and solution polymerization method.

As concrete examples of the compound c to be used for the method of (2),

(2-1) Compounds having two or more pieces of one kind of the reactive group in the molecular unit thereof,
(2-2) Compounds having two or more kinds of the reactive group in the molecular unit thereof, and
(2-3) Compounds having one or more kinds of the reactive group and a group other than the reactive group in the molecular unit thereof may be cited. It is provided, however, that the expression "group other than the reactive group" used in (2-3) above shall be construed as referring to a group excepting the epoxy group and the thioepoxy group and exhibiting the ability to react with the group contained in the polymer d to be mentioned specifically hereinafter. For example, iso-cyanate group, amino group, carboxyl group, hydroxyl group, vinyl group, and halogen groups answer this description.

As concrete examples of the polymer d to be used for the method of (2), such vinyl type polymers, polyesters, and polyethers as have a group capable of reacting with the compounds indicated in (2-1) ~ (2-3) above may be cited. As concrete examples of the group which is capable of reacting with the compound c, hydroxyl group (inclusive of phenolic hydroxyl group), carboxyl group, quinone group, amino group, and epoxy group may be cited. The polymers having these groups can be easily obtained by any of the known means of polymerization such as, for example, radical polymerization and polycondensation.

For the purpose of obtaining the polymer (A) having the reactive group according to the method of (2), it suffices to cause the compound c with the polymer d under conditions so selected that at least part of the reactive group will remain unaltered.

As concrete examples of the polymer c to be used for the method of (3), polymers having in the molecular unit thereof such groups as, for example, vinyl group, carboxyl group, chloro-hydrin group, and glycol group which are capable of being converted into an epoxy group or a thioepoxy group may be cited. These polymers can be easily converted into polymers (A) having an epoxy group and/or a thioepoxy group by a method well known to the art.

The polymer (A) is appropriately selected so as to suit the qualities such as, for example, hydrophilicity, oleophilicity, and other forms of affinity which are to be imparted to the carbon black graft polymer. For example, a vinyl type polymer or a polyether having acrylic acid as a main component thereof is used where the hydrophilicity is to be imparted and a vinyl type polymer or a polyester having styrene as a main component thereof is used where the affinity is to be imparted. The molecular weight of the polymer (A) is not critical particularly. For the sake of the conspicuous effect of the treatment on the carbon black and on account of the operational convenience during the course of the reaction with the carbon black, however, the average molecular weight advantageously is in the range of 1,000 ~ 10,000, more preferably 2,000 ~ 9,000, and most preferably 3,000 ~ 8,000. If the number average molecular weight is less than 1,000, the exertion of torque on the mixture of the reactants will not be realized. If it exceeds 10,000, the kneading device will be overloaded possibly to the extent of rendering the production itself difficult.

In this invention, when the polymer (A) having an epoxy group or a thioepoxy group as the reactive group is used to treat the carbon black by means of a continuous kneading device, this polymer (A) must be in such a state that the effective pendant number ($P_{eff}$) represented by the following formula will fall in the range of 0.5 ~ 1.3 per molecule

$$P_{eff} = Mn/(E - Ac)$$

(wherein Mn represents the number average molecular weight of the polymer (A), E the number of mols of the epoxy group and/or thioepoxy group per g of the polymer (A), and Ac the number of mols of the epoxy-reactive group per g of the polymer (A)).

The term "average molecular weight (Mn)" used in the present specification refers to the value determined by the gel permeation chromatography (GPC) method. Specifically, it is found by dissolving 15 mg of a given polymer in 5 ml of THF, passing the solution through a disposable filter containing pores, 0.5 μm in diameter, collecting the filtrate as a sample, passing the sample through two columns of TSK gel, GMHXL, (produced by Toso Co., Ltd. and marketed under product code of "HLC-8020"), eluting the adsorbate under the conditions of a column temperature of 45°C and a flow volume of 1 ml/min, analyzing the eluate to determine the refractive index, and reducing the value of refractive index to a polystyrene content.

The "number, E, of moles of the epoxy group and/or the thioepoxy group per g of the polymer (A)" refers to

the value [1/EV] which is calculated from the epoxy and/or thioepoxy equivalent weight (EV) (the amount of a sample required to contain therein 1 geq (1 mol) of epoxy group and/or thioepoxy group) determined by the chlorohydrin HCl method and the number, Ac, of moles of the epoxy-reactive group per g of the polymer (A) is the value [AV/(56.11 x 1000)] which is calculated from the acid value (AV) (number of mgs of the KOH (molecular weight 56.11) necessary for the neutralization of the COOH group present per g of the resin) determined by adopting, with necessary modifications, the method for the determination of acid value defined in Sub-section 4.3 of JIS K 6901-1986 (Method for Testing Liquid Unsaturated Polyester Resin).

If the effective pendant number ($P_{eff}$) of the polymer (A) is less than 0.5, the kneading of the polymer (A) with the carbon black in the continuous kneading device will give only insufficient surface treatment to the carbon black and the produced carbon black graft polymer will exhibit no sufficient affinity for other substances. Conversely, if the effective pendant number ($P_{eff}$) exceeds 1.3, the kneading of the polymer (A) with the carbon black in the continuous kneading device will suffer part of the polymer (A) to remain inside the continuous kneading device and form a gel possibly to the extent of rendering the production of the carbon black graft polymer infeasible.

The polymer (A) having the effective pendant number ($P_{eff}$) in the range of 0.5 ~ 1.3 as described above is obtained by designing the molecular formulation of the relevant components of the polymer (A) so that the average number of epoxy groups and/or thioepoxy groups present per molecule will fall in the range of 0.5 ~ 1.3 and polymerizing the relevant monomer by the standard method of polymerization mentioned above (namely, by approximating the aforementioned acid value practically to 0). The fact that the relevant components of the polymer (A) are so formulated that the average number of epoxy groups and/or thioepoxy groups present per molecule will fall in the range of 0.5 ~ 1.3 dictates due attention because the number of epoxy groups and/or thioepoxy groups in the individual molecules will possibly disperse relatively widely and the ultimately produced carbon black graft polymer will suffer from impaired stability of quality if the polymer system is not formed amply uniformity. As an alternative method, the polymerization system prepared for the production of the polymer (A) may incorporate therein a polymerizable monomer or a compound containing in the molecular unit thereof such functional groups as epoxy groups and/or thioepoxy groups in a larger average number falling approximately in the range of 5 ~ 1.1, preferably 3 ~ 1.1, for example, per molecule and further incorporate therein an epoxy-reactive group (carboxylic acid group) necessary for the consumption of excess epoxy group and/or thioepoxy group.

As concrete means to introduce the epoxy-reactive group into the polymer (A), (1) a method which uses a peroxide type compound as a polymerization initiator and in a relatively large amount in the polymerization for the production of the polymer (A) and relies on this polymerization initiator not only to fulfill the part of a polymerization initiating seed in accelerating the polymerization but also to enable the monocarboxylic acid produced by the resultant decomposition to function as an epoxy-reactive group, (2) a method which incorporates in the polymerization system prepared for the production of the polymer (A) a mono-carboxylic acid incapable of substantially inhibiting the polymerization reaction, or a suitable combination of these two methods is conceivable.

Though the method of (1) mentioned above is not specified particularly, a method based on suspension polymerization, for example, is employed appropriately. As concrete examples of the peroxide type polymerization initiator to be used therein, benzoyl peroxide, lauroyl peroxide, octanoyl peroxide, benzoyl orthochloroperoxide, benzoyl orthomethoxy peroxide, methylethyl ketone peroxide, diisopropyl peroxy dicarbonate, cumene hydroperoxide, cyclohexanone peroxide, t-butyl hydroperoxide, and diisopropyl benzene hydroperoxide may be cited. Among other peroxide type polymerization initiators cited above, benzoyl peroxide proves particularly advantageous. Though the amount of the peroxide type polymerization initiator to be added is variable with such factors as the kind of a polymerizable monomer or a compound participating in the polymerization and having an epoxy group and/or a thioepoxy group in the molecular unit therein and the ratio of combination thereof with the other polymerizable monomer in the polymerization system, the peroxide is appropriately added to the monomer composition in an amount in the range of 3 ~ 5 mol%, preferably 3.5 ~ 4.5 mol%, based on the amount of the composition.

Though the method of (2) mentioned above is not specified particularly, a method based on solution polymerization, for example, is employed appropriately. As concrete examples of the monocarboxylic acid to be used therein, benzoic acid, alkyl benzoic acids such as methyl benzoic acid and ethyl benzoic acid, chlorobenzoic acid, methoxy benzoic acid, naphthalene monocarboxylic acid, alkyl naphthalene monocarboxylic acids such as naphthalene monocarboxylic acid, and biphenyl carboxylic acid may be cited. Among other monocarboxylic acids cited above, benzoic acid and methyl benzoic acid prove particularly advantageous. Though the amount of the monocarboxylic acid to be added, like that of the peroxide mentioned above, cannot be specified generally, it is appropriately added in an amount in the range of 0.01 ~ 5 mol%, preferably 0.1 ~ 3 mol%, based on the amount of the composition prepared for the polymerization.

When the polymer (A) to be used in this invention is produced by the method of suspension polymerization, the composition of polymerizable monomer components including at least partly the polymerizable monomer having an epoxy group and/or a thioepoxy group in the molecular unit thereof is suspended in an aqueous medium and the suspension is polymerized. The polymerization temperature is appropriately in the approximate range of 50 ~ 100°C,

preferably 60 ~ 90°C.

The stabilizers which are usable in the suspension polymerization include water-soluble macromolecular compounds such as polyvinyl alcohol, starch, methyl cellulose, carboxymethyl cellulose, hydroxyethyl cellulose, polysodium acrylate, and polysodium methacrylate; surfactants such as anionic surfactants, cationic surfactants, amphoteric surfactants, and nonionic surfactants; and barium sulfate, calcium sulfate, barium carbonate, magnesium carbonate, calcium phosphate, talc, clay, diatomaceous earth, and metal oxide powders, for example.

The anionic surfactants include fatty acid salts such as sodium oleate and potassium castor oil, alkyl sulfuric esters such as sodium lauryl sulfate and ammonium lauryl sulfate, alkyl-benzene sulfonates such as sodium dodecylbenzene sulfonate, alkyl naphthalene sulfonates, alkane sulfonates, dialkyl sulfosuccinates, alkyl phosphoric esters, naphthalene sulfonic acid formalin condensate, polyoxyethylene alkylphonyl ether sulfuric esters, and polyoxyethylene alkyl sulfuric esters, for example.

The nonionic surfactants include polyoxyethylene alkyl ethers, polyoxyethylene alkylphenyl ethers, polyoxyethylene fatty esters, sorbitan fatty acid esters, polyoxy sorbitan fatty acid esters, polyoxyethylene alkyl amines, glycerin fatty acid esters, and oxyethylene-oxypropylene block polymer, for example.

The cationic surfactants include alkyl amine salts such as lauryl amine acetate and stearyl amine and quaternary ammonium salts such as lauryl trimethyl ammonium chloride, for example.

The amphoteric ion surfactants include lauryl dimethyl amine oxide, for example.

The amount of the stabilizer to be used must be suitably selected, depending on the kind and the composition of the stabilizer to be adopted. Where a water-soluble macromolecular compound is adopted as the stabilizer, for example, it is used appropriately in an amount in the range of 0.01 ~ 20% by weight, preferably 0.1 ~ 10% by weight. Where a surfactant is adopted, it is appropriately used in an amount in the range of 0.01 ~ 10% by weight, preferably 0.1 ~ 5% by weight, based on the amount of the composition of polymerizable monomer components.

The polymerization initiator can be added to the polymer-izable monomer components (oil phase). Besides the peroxide type initiators cited above, the polymerization initiators usable herein include azo type compounds such as, for example, 2,2'-azo-bis-isobutyronitrile, 2,2'-azobis-(2,4-dimethyl valeronitrile), 2,2'-azobis-2,3-dimethyl butyronitrile, 2,2'-azobis-(2-methyl butyronitrile), 2,2'-azobis-2,3,3-trimethyl butyronitrile, 2,2'-azobis-2-isopropyl butyronitrile, 1,1'-azobis-(cyclohexane-1-carbonitrile), 2,2'-azobis-(4-methoxy-2,4-dimethyl valero-nitrile), 2-(carbamoylazo) isobutyronitrile, 4,4'-azobis-4-cyano-valeric acid, and dimethyl-2,2'-azobis-isobutyrate. When a polymerization initiator other than the peroxide type initiators is adopted, it is appropriately used in an amount in the range of 0.01 ~ 10% by weight, preferably 0.1 ~ 5% by weight.

Where the polymer (A) for use in this invention is to be obtained by solution polymerization, the composition of polymerizable monomer components including at least partly the polymerizable monomer having an epoxy group and/or a thioepoxy group in the molecular unit thereof is polymerized as stirred in such a suitable organic solvent as toluene, xylene, or benzene. The polymerization temperature is appropriately in the approximate range of 30 ~ 200°C, preferably 50 ~ 180°C. The polymerization initiator to be used herein may be any of the peroxide type and azo type compounds cited above. It is added to and dissolved in a solution of the polymerizable monomer components in an organic solvent. Where a monocarboxylic acid such as benzoic acid is elected to be added to the polymerization system, this addition is appropriately implemented by adding the monocarboxylic acid or a solution thereof in an organic solvent gradually and dropwise to the polymerization system during the course of the polymerization reaction.

The method of production according to this invention enables the carbon black graft polymer to be stably produced with a high grafting efficiency by causing the polymer (A) described above and carbon black to be mixed in a continuous kneading device.

The continuous kneading device to be used in this invention may be any of various kinds of known devices such as, for example, a uniaxial extruding device and a biaxial extruding device. Owing to the use of this continuous kneading device, the carbon black which is in a state of secondary agglomeration when it is put to use as a raw material is fully blended and, while reacting with the polymer (A), disintegrated and diffused into minute particles uniform in diameter so efficiently as to enhance the efficiency of the reaction and permit continuous production of the carbon black graft polymer.

Though the kneading conditions which are used in the conti-nuous kneading device are not particularly restricted, it is appropriate to select the torque during the course of kneading in the approximate range of 0.1 - 20 kg.m, preferably 0.3 - 10 kg.m.

If the temperature during the course of kneading is less than 20°C, the reaction of the carbon black with the polymer (A) will possibly fail to proceed thoroughly. Conversely, if it exceeds 300°C, the polymer (A) will possibly succumb to an adverse phenomenon of degeneration. If the torque during the course of kneading is less than 0.1 kg•m, the disintegration of the carbon black and the evolution of heat by the kneading action will not proceed thoroughly and, as a result, the reaction of the carbon black and the polymer (A) possibly fail to advance amply. If the torque conversely exceeds 20 kg·m, the polymer (A) will be cut asunder and the evolution of heat by the kneading action will proceed possibly to the extent of inducing the polymer (A) to be degenerated.

For the purpose of enabling the reaction of the carbon black and the polymer (A) to proceed efficiently and stably, the continuous kneading device is arranged so that its temperature thereof will vary continuously from 40°C, a level below the Tg of the reactants, to 180°C. This change of temperature ensures perfect transition of the blend of the carbon black and the polymer (A) from the physical mixture of particles to the chemical reaction by thorough contact of particles. The continuous change of temperature may be implemented, for example, by setting appropriatedly varied temperatures for the individual cylinder blocks.

Though the amount of the polymer (A) having an epoxy group and/or a thioepoxy group to be used in the reaction can be freely varied to suit the purpose for which the produced carbon black graft polymer will be ultimately used, it is generally proper to use the polymer (A) in an amount in the range of 100 ~ 500 parts by weight, preferably 150 ~ 400 parts by weight, and more preferably 200 ~ 400 parts by weight, based on 100 parts by weight of the carbon black for the purpose of fully manifesting the effect of improving the dispersibility of the polymer (A) relative to various substances and, at the same time, enabling the carbon black to keep the characteristics thereof intact.

The reaction of the carbon black and the polymer (A) may be effected by a method which induces a reaction exclusively between these two reactants. Otherwise, it may be effected in the presence of a polymer or a substance other than the polymer (A) having the reactive group. The method for continuous produc-tion according to this invention is aimed at obtaining the carbon black graft polymer with high operational efficiency by passing the reactants just once through a continuous device. The reactants may be passed through the continuous device where necessary twice, thrice, or even more often. In the method for continuous production, however, it is advantageous for the sake of stabilizing the magnitude of torque and the reaction to minimize the amounts of a solvent, water, and the like which are present in the polymerization system.

The carbon black graft polymer which is obtained by the method of production according to this invention results from the reaction of the polymer (A) with the carbon black as mentioned above. The polymer (A) component mentioned above is grafted with a high efficiency to the surface of the carbon black because the epoxy group and/or the thioepoxy group in the polymer (A) has high reactivity with the surface functional group of the carbon black. Further, the backbone structure of the polymer (A) can be freely selected so long as the polymer (A) has an epoxy group and/or a thioepoxy group in the molecular unit thereof, the polymer (A) is enabled to impart varying properties to the carbon black to suit the purpose for which the ultimately produced carbon black graft polymer will be used. The carbon black graft polymer thus obtained exhibits improved affinity for various substances and excels prominently in dispersibility in various substances such as, for example, organic macromolecular compounds, water, and organic solvents and, therefore, proves useful for coloring agents such as inks, toners for the development of electrostatically charged images, coating materials, and plastic molding materials and for reagents for modifying various macromolecular compounds. The method for production according to this invention enables the carbon black graft polymer which has dispersibility and other various characteristics thereof improved as mentioned above to be continuously manufactured by a simple operation. The method of this invention for the produc-tion of the carbon black graft polymer, therefore, enjoys very high commercial serviceability.

The term "carbon black graft polymer" used hereinabove does not strictly designate exclusively such carbon black as has a polymer bound thereto as a graft chain but designates what contains such a part of the polymer as has escaped being bound directly to the carbon black during the process of production in addition to such carbon black as has the polymer bound thereto as a graft chain. The reason for this definition of the term is that even when the production is effected by the method described above, there are times when the grafting ratio will fail to reach 100% and the carbon black having the polymer bound thereto as a graft chain and the polymer having escaped being directly bound to the carbon black will not be separated completely after the process of production.

Now, this invention will be described specifically below with reference to working examples. It should be noted, however, that this invention is not limited to these working examples. Wherever the word "parts" is mentioned in the following examples and controls, it shall be construed invariably as referring to "parts by weight" unless otherwise specified.

Synthesis Example 1

In a flask provided with a stirrer, an inert gas inlet tube, a reflux condenser, a thermometer, and a dropping funnel, 300 parts of toluene was placed. A mixture prepared in advance by dissolving 12 parts of azoisobutyronitrile in a polymerizing monomer consisting of 189.8 parts of styrene and 10.2 parts of glycidyl methacrylate was uniformly dissolved in toluene to obtain a homogeneous solution. A solution of 4.39 parts of benzoic acid (molecular weight 122.1) in 100 parts of toluene was placed in the dropping funnel.

The mixture in the flask was heated as swept with nitrogen gas. After the mixture reached 80°C, the toluene solution of benzoic acid was added dropwise to the mixture from the dropping funnel and they were meanwhile stirred continuously for 8 hours to undergo polymerization. Then, the flask was cooled to obtain a polymer solution. This polymer solution was treated with a biaxial extruding device to expel the solvent and obtain a polymer (1).

This polymer (1) was found to have a number average molecular weight, Mn, of 5,600, a molecular weight distribution of 2.35, an epoxy equivalent weight of 4308, and an acid number of 3.01.

Synthesis Example 2

In the same flask as used in synthesis Example 1, 400 parts of deionized water having 0.1 part of polyvinyl alcohol dissolved therein was placed and heated to 90°C. Meanwhile, a mixture formed in advance with 158.6 parts of styrene, 30 parts of n-butyl acrylate, 11.4 parts of glycidyl methacrylate, and 20 parts of benzoyl peroxide as an initiator was placed in the dropping funnel. Then, this mixture was added dropwise over a period of 2 hours into the flask set at 90°C. Then, the reactants in the flask were left aging at the same temperature for 3 hours and subsequently cooled to obtain a polymer suspension. This polymer suspension was filtered and then dried to obtain a polymer (2).
This polymer (2) was found to have a number average molecular weight, Mn, of 4,900, a molecular weight distribution, (Mn/Mw), of 2.45, an epoxy equivalent weight of 4850, and an acid number of 2.64.

Synthesis Example 3

In the same flask as used in Synthesis Example 1, 400 parts of deionized water having 0.2 part of polyvinyl alcohol dissolved therein was placed. A mixture formed preparatorily by combining 194.3 parts of styrene, 5.7 parts of glycidyl methacrylate, and 10 parts of benzoyl peroxide as an initiator was added to the deionized water and they were stirred at a high speed to form a homogeneous suspension. This suspension was heated to 80°C as swept with nitrogen gas and stirred meanwhile at this temperature for five hours to undergo polymerization and subsequently cooled to obtain a polymer suspension. This polymer suspension was filtered and dried to obtain a polymer (3).
This polymer (3) was found to have a number average molecular weight, Mn, of 7,000, an epoxy equivalent weight of 6250, and an acid number of 1.12.

Synthesis Example 4

In the same flask as used in Synthesis Example 1, 400 parts of deionized water having 0.2 part of polyvinyl alcohol dissolved therein was placed. A mixture formed preparatorily by combining 194.52 parts of styrene, 5.48 parts of glycidyl meth-acrylate, and 14 parts of benzoyl peroxide as an initiator was added to the deionized water and they were stirred at a high speed to form a homogeneous suspension. This suspension was heated to 80°C as swept with nitrogen gas and stirred meanwhile at this temperature for five hours to undergo polymerization and subsequently cooled to obtain a polymer suspension. This polymer suspension was filtered and dried to obtain a polymer (4).
This polymer (4) was found to have a number average molecular weight, Mn, of 7,000, an epoxy equivalent weight of 7977.2, and an acid number of 1.88.

Comparative Synthesis 1

A polymer (C1) for comparison was obtained by faithfully following the procedure of Synthesis Example 1 while omitting the addition of benzoic acid. This polymer (C1) for comparison was found to have a number average molecular weight, Mn, of 5,600, an epoxy equivalent weight of 2795, and an acid number of 0.

Example 1

A powder mixture (1) was obtained by mixing 40 parts of the polymer (1) having an epoxy group as a reactive group obtained in Example 1 of Synthesis and 20 parts of carbon black (produced by Mitsubishi Chemical Industries, Ltd, and marketed under product code of "MA-100R" at a rate of 1000 rpm for 3 minutes by means of a super mixer (produced by Kawata K.K.).
By means of a biaxial extruding device (produced by Ikegai Iron Works, Ltd. and marketed under product code of "PCM-45-30"), with the sequential cylinder blocks thereof set at temperatures gradually heightened from 40°C to 160°C, the powder mixture was kneaded at 250 rpm to obtain a carbon black graft polymer (1). This polymer was cooled and then coarsely pulverized by means of a cutter mill (produced by Nishimura Kikai K.K.) to obtain coarse particles of carbon black polymer (1') having particle diameters in the approximate range of 1 to 3 mm.
The coarsely pulverized carbon black polymer (1') was tested for characteristics by means of a Soxhlet extractor. The results of the test are shown in Table 1.
For the purpose of examining the kneading operation carried out on the reactants in the biaxial extruding device mentioned above to determine the continuity of this operation, the polymer (1) and the carbon black fed in increased amounts, though at the same ratio as mentioned above, were mixed by means of the super mixer to form

the powder mixture (1) and the powder mixture (1) was fed to the biaxial extruding device under the same conditions as mentioned above. During an operation of the device which was subsequently continued for about 30 hours, the production of the carbon black graft polymer could be stably obtained.

Referential Example 1

In the same manner as in Example 1, 40 parts of the polymer (1) having an epoxy group as a reactive group obtained in Example 1 of Synthesis and 20 parts of carbon black (produced by Mitsubishi Chemical Industries, Ltd. and marketed under product code of "MA-100R") were mixed at 1000 rpm for 3 minutes by means of a super mixer (produced by Kawata K.K.) to obtain a powder mixture (1).
This power mixture (1) was kneaded for 15 minutes by means of a laboratory blast mill (produced by Toyo Seiki K.K.) under the conditions of 160°C and 100 rpm to obtain a carbon black graft polymer (R1) for referential purpose. This carbon black graft polymer was cooled and then coarsely pulverized by means of a cutter mill (produced by Nishimura Kikai K.K.) to obtain a coarsely pulverized carbon black graft polymer (R1'), about 1 ~ 3 mm in diameter, for referential purpose.
The coarsely pulverized carbon black graft polymer (R1') thus obtained was tested for characteristics by means of a Soxhlet extractor. The results of the test are shown in Table 1.

Examples 2 ~ 4

Coarsely pulverized carbon black graft polymers (2') ~ (4') were obtained by following the procedure of Example 1 while using polymers (2) ~ (4) in the place of the polymer (1).
The coarsely pulverized carbon black graft polymers (2') ~ (4') thus obtained were tested for characteristics by means of a Soxhlet extractor. The results of the test are shown in Table 1.
For the purpose of examining the kneading operation carried out on the reactants in the biaxial extruding device to determine the continuity of this operation, the amounts of the reactants for the polymers (2') ~ (4') to be fed were increased in the same manner as in Example 1. During an operation of the device which was subsequently continued for about 30 hours, the production of the carbon black graft polymer could be invariably obtained stably.

Referential Examples 2 ~ 4

Coarsely pulverized carbon black graft polymers (R2') ~ (R4') for referential purpose were obtained by following the procedure of Referential Example 1 while the polymers (2) ~ (4) were used in the place of the polymer (1).
The coarsely pulverized carbon black graft polymers (R2') ~ (R4') thus obtained were tested for characteristics by means of a Soxhlet extractor. The results of the test are shown in Table 1.

Control 1

A coarsely pulverized carbon black graft polymer (C1) for comparison was obtained by following the procedure of Example 1 while the polymer (C1) for comparison was used in the place of the polymer (1).
The coarsely pulverized carbon black graft polymer (C1') for comparison thus obtained was tested for characteristics by means of a Soxhlet extractor. The results of the test are shown in Table 1.
After about one hour's operation of the device, the powder mixture ceased to emanate from the nozzle of the extruding device. This fact clearly indicates that the resin component was gelled inside the extruding device.

Referential Example 5

A coarsely pulverized carbon black graft polymer (R5') for referential purpose was obtained by following the procedure of Example 1 while the polymer (C1) for comparison was used in the place of the polymer (1).
The coarsely pulverized carbon black graft polymer (R5') for referential purpose thus obtained was tested for characteristics by means of a Soxhlet extractor. The results of the test are shown in Table 1.

Table 1

| | | Result of Soxhlet Extraction Test | |
|---|---|---|---|
| | Effective Pendant Number of Polymer (A) | Appearance of Extract | (Nonvolatile Content in Extract/ Total Amount of Sample Used for Extraction) ×100 (%) |
| Example 1 | 1.00 | Black and Homogeneous | 95 |
| Reference 1 | 1.00 | Black and Homogeneous | 95 |
| Example 2 | 0.78 | Black and Homogeneous | 99 |
| Reference 2 | 0.78 | Black and Homogeneous | 99 |
| Example 3 | 1.12 | Black and Homogeneous | 96 |
| Reference 3 | 1.12 | Black and Homogeneous | 92 |
| Example 4 | 0.64 | Black and Homogeneous | 90 |
| Reference 4 | 0.64 | Black and Homogeneous | 89 |
| Control 1 | 2.00 | Black and Semiopaque | 48 |
| Reference 5 | 2.00 | Black and Homogeneous | 87 |

Example 5

By means of a Henschel mixer, 30 parts of the coarsely pulverized carbon black graft polymer (2') obtained in Example 2, 68 parts of a styrene-butyl methacrylate copolymer (produced by Sanyo Chemical Industries Co., Ltd. and marketed under trademark designation of "Himer SEM 73"), 1 part of a charge controlling reagent (produced by Hodogaya Chemical Co., Ltd. and marketed under trademark designation of "Zizen Spiron Black TRH"), and 1 part of a polypropylene wax (produced by Sanyo Chemical Industries Co., Ltd. and marketed under trademark designation of "Viscol 550P") were mixed by stirring. This mixture was melt kneaded by means of a continuous extruding device, cooled, coarsely pulverized, finely pulverized by means of a jet mill, and classified to obtain an electrostatically charged image developing toner (1), 3 ~ 15 μm in diameter.

A developing agent (1) was prepared by uniformly mixing 3 parts of the toner and 97 parts of a ferrite type carrier, 50 ~ 80 μm in diameter. When the developing agent (1) was used in a copying device (produced by Mita Industrial Co., Ltd. and marketed under product copy of "DC-113 Model") to develop an image, the image consequently produced showed a clear outline and abounded in contrast. Even after production of 200,000 copies of the image, the toner produced as perfect an image as before.

Methods of determination

The magnitudes of various characteristics mentioned in the working examples were determined as follows.

(1) Molecular weight

The number average molecular weight (Mn) and the molecular weight distribution are the numerical values determined by the gel permeation chromatography (GPC) method. Specifically, it is found by dissolving 15 mg of a given polymer in 5 ml of THF, passing the solution through a disposable filter containing pores, 0.5 μm in diameter, collecting the filtrate as a sample, passing the sample through two columns of TSK gel, GMHXL, (produced by Toso Co., Ltd. and marketed under product code of "HLC-8020"), eluting the adsorbate under the conditions of a column temperature of 45°C and a flow volume of 1 ml/min, analyzing the eluate to determine the refractive index, and reducing the value of refractive index to a polystyrene content.

(2) Epoxy equivalent weight

This physical constant is determined by adding HCl in an excess amount to an epoxy group in a suitable solvent and inducing quantitative addition of HCl to the epoxy group and quantitatively determining the residual HCl as chlorohydrin.

First in the determination, the sample is accurately weighed out (by two measurements) (about 0.15 g) and placed in a conical flask, 100 ml in inner volume, in which the sample and 10 ml of a 0.1N HCl-THF solution (factor - f) added thereto are stirred at room temperature for one hour. The 0.1N HCl-THF solution is prepared without fail at the time of determination and tested accurately for the factor - f. Then, the resultant sample solution is made to add 20 ml of an aqueous 0.1N silver nitrate solution. At this time, about 2 ~ 3 ml of concentrated nitric acid is added to the combined solution to prevent a white precipitate (AgCl) consequently produced therein from being decomposed by the light. Further, about 5 ml of nitrobenzene (substitutable with diethyl ether or acetone) is added thereto to facilitate visual detection of an end point in the titration. Eight drops of an aqueous 8% iron alum solution are added as an indicator. The sample solution is titrated with an aqueous 0.1N potassium thiocyanate (KSCN) solution. The KSCN reacts with the residual silver nitrate and produces AgCN (white precipitate). The precipitate, after silver nitrate has ceased to exist, reacts with the Fe of the iron alum and assumes a red color. The time of appearance of this red color is taken as the end point of the titration and the amount of titration, m (ml), is then measured. The epoxy equivalent weight (EV) is calculated according to the following formula using the amount of titration.

$$EV = 1000x/\{2f - (2 - 0.1\ m)\}$$

(wherein x represents the amount of the sample (g) and m the amount of titration (ml)).

Incidentally, the factor - f is determined as follows on the very date of the determination of the epoxy equivalent weight.

a) Place 5 ml of the 0.1N HCl-THF solution in a conical flask, 100 ml in inner volume.
b) Add an aqueous 0.1N silver nitrate solution thereto.
c) Add 1 ml of concentrated nitric acid.
d) Add about 2 ml of nitrobenzene (substitutable with diethyl ether or acetone).
e) Add three drops of an aqueous 8% iron alum solution.
f) Titrate the resultant sample solution with an aqueous 0.1N KSCN solution, reckon the time of appearance of a red color as the end point, and calculate the amount of titration.

$$f = (10 - \text{Amount of titration})/5$$

(3) Acid number

**[0089]** This physical constant is determined by following the method for determination of acid number specified in Sub-section 4.3 of JIS K 6901$^{-1986}$ with the necessary modifications.

First in the determination, a sample, about 1 ~ 3 g in amount, is accurately weighed out (by two measurements), placed in a conical flask, 100 ml in inner volume, thoroughly dissolved with about 10 ~ 30 ml of a toluene/ethanol mixed solution (voluminal ratio 7/3) added thereto, made to add a mixed indicator (prepared by obtaining 0.10 g of bromothymol blue and 0.10 g of phenol red, making them to add 20 ml of distilled water and then add an ethyl alcohol 0.2 mol/l {0.1N} potassium hydroxide solution until the neighborhood of the range of color change of an indicator, dissolving while stirring all the combined components, and diluting the resultant solution with 200 ml of distilled water), and titrated with an ethyl alcohol 0.1 mol/l {0.1N} potassium hydroxide solution. The time of appearance of a color change from yellow to light purple is taken as the end point of the titration. Separately, the mixed solution and the indicator are placed in a conical flask and used for a blank test. Then, the acid number (AV) is calculated in accordance with the following formula.

$$AV = \{(V_1 \sim V_2) \times f \times 5.61\}/m$$

(wherein $V_1$ represents the amount of the ethyl alcohol 0.1 mol/l {0.1N} potassium hydroxide solution used (ml) in the main test, $V_2$ the amount of the ethyl alcohol 0.1 mol/l {0.1N} potassium hydroxide solution used (ml) in the blank test, f the factor of the ethyl alcohol 0.1 mol/l {0.1N} potassium hydroxide solution, and m the mass (g) of the sample).

(4) Soxhlet extraction test

This test is carried out by thoroughly dispersing 3 g of the produced carbon black graft polymer in 30 g of benzene, placing the resultant carbon black graft polymer dispersion wholly in a cylindrical filter paper set in a Soxhlet

extractor, adding 117 g of benzene to the sample dispersion, and heating the combined solution to 90°C to induce Soxhlet extraction.

The extract consequently obtained is analyzed for an involatile content. The Soxhlet extraction ratio is found in accordance with the formula, (involatile content (g)/3 g) × 100 (%).

## Claims

1. A method for the production of a carbon black graft polymer by the reaction of carbon black and a polymer (A) having an epoxy group and/or a thioepoxy group, in which method the reaction of the carbon black and the polymer (A) is carried out by means of a continuous kneading device and the polymer (A) fed to the continuous kneading device is in such a state that the effective pendant number ($P_{eff}$) represented by the following formula falls in the range of 0.5 ~ 1.3 per molecule.

$$P_{eff} = Mn/(E\text{-}Ac)$$

(wherein Mn represents the number average molecular weight of the polymer (A), E the number of mols of the epoxy group and/or the thioepoxy group per g of the polymer (A), and Ac the number of mols of the epoxy- or thioepoxy-reactive group per g of the polymer (A)) **characterised in that** the temperature in the continuous kneading device is arranged to increase continuously from 40°C to 180°C.

2. A method as claimed in Claim 1, **characterised in that** the polymer (A) has been obtained by charging a reaction vessel with polymerizable monomer components in amounts such that the polymer (A) to be obtained by polymerization will have an average number of epoxy groups and/or thioepoxy groups per molecule in the range of 0.5 to 1.3, and polymerizing the polymerizable monomer components substantially in the absence of a free epoxy- or thioepoxy-reactive group.

3. A method as claimed in Claim 1, **characterised in that** the polymer (A) has been obtained by charging a reaction vessel with polymerizable monomer components in amounts such that the polymer (A) to be obtained by polymerization will have an average number of epoxy groups and/or thioepoxy groups per molecule in the approximate range of 5 to 1.1, and polymerizing the polymerizable monomer components in the presence of a free epoxy- or thioepoxy-reactive group necessary for the consumption of excess expoxy groups and/or thioepoxy groups.

4. A method as claimed in any of Claims 1 to 3, **characterised in that** carbon black having a pH value of not more than 5 is used.

5. A method as claimed in any of Claims 1 to 4, **characterised in that** the amount of the polymer (A) to be mixed with the carbon black is in the range of 100 ~ 500 parts by weight, based on 100 parts by weight of the carbon black.

## Patentansprüche

1. Verfahren zur Herstellung eines Ruß-Pfropfpolymers durch Umsetzung von Ruß und einem Polymer (A), das über Epoxygruppen und/oder Thioepoxygruppen verfügt, bei welchem Verfahren man die Umsetzung mit Hilfe eines kontinuierlich betriebenen Knetwerks durchführt, wobei man das Polymer (A) dem kontinuierlich betriebenen Knetwerk in einer Weise zuführt, dass die effektiven Pfropfzahl ($P_{eff}$) entsprechend folgender Formel

$$P_{eff} = Mn / (E - Ac)$$

in den Bereich von 0,5 - 1,3 pro Molekül fällt (wobei Mn das Zahlenmittel des Molekulargewichts vom Polymer (A), E die Anzahl Mole an Epoxy- und/oder Thioepoxygruppe je g Polymer (A) und Ac die Anzahl Mole an Epoxy- oder Thioepoxy-reaktiven Gruppen je g Polymer (A) bezeichnet), **dadurch gekennzeichnet, dass** man die Temperatur im kontinuierlich betriebenen Knetwerk kontinuierlich von 40 °C auf 180 °C ansteigen lässt.

2. Verfahren gemäß Anspruch 1, **dadurch gekennzeichnet, dass** das Polymer (A) erhalten wird, indem man ein Reaktionsgefäß mit polymerisierbaren Monomeren in einer solchen Menge beschickt, dass das durch die Polymerisation erhältliche Polymer (A) ein Zahlenmittel an Epoxy- und/oder Thioepoxygruppen pro Molekül im Bereich von 0,5 - 1,3 aufweist, und die polymerisierbaren Monomere im wesentlichen in Abwesenheit freier, Epoxy- oder Thioepoxy-reaktiven Gruppen polymerisiert.

**3.** Verfahren gemäß Anspruch 1, **dadurch gekennzeichnet, dass** das Polymer (A) erhalten wird, indem man ein Reaktionsgefäß mit polymerisierbaren Monomeren in einer solchen Menge beschickt, dass das durch die Polymerisation erhältliche Polymer (A) ein Zahlenmittel an Epoxy- und/oder Thioepoxygruppen pro Molekül im Bereich von schätzungsweise 5 - 1,1 aufweist, und die polymerisierbaren Monomere in Gegenwart freier, Epoxy- und/oder Thioepoxy-reaktiver Gruppen polymerisiert, die zum Verbrauch von überschüssigen Epoxy- und/oder Thioepoxygruppen erforderlich sind.

**4.** Verfahren gemäß irgendeinem der Ansprüche 1 bis 3, **dadurch gekennzeichnet, dass** man Ruß mit einem pH-Wert von nicht mehr als 5 einsetzt.

**5.** Verfahren gemäß irgendeinem der Ansprüche 1 bis 4, **dadurch gekennzeichnet, dass** die Menge an Polymer (A), die mit dem Ruß gemischt wird, im Bereich von 100 - 500 Gewichtsteilen bezogen auf 100 Gewichtsteilen Ruß ist.

## Revendications

**1.** Procédé pour la production d'un polymère de greffage au noir de carbone à l'aide de la réaction de noir de carbone et d'un polymère (A) possédant un groupe époxy et/ou un groupe thioépoxy, procédé dans lequel on réalise la réaction du noir de carbone et du polymère (A) au moyen d'un dispositif de malaxage continu et le polymère (A) introduit dans le dispositif de malaxage continu est dans un état tel que le nombre de groupes pendants effectifs ($P_{eff}$) représenté par la formule suivante tombe dans la gamme de 0,5 à 1,3 par molécule ;

$$P_{eff} = Mn/(E - Ac)$$

(dans laquelle Mn représente la masse moléculaire moyenne en nombre du polymère (A), E le nombre de moles du groupe époxy et/ou du groupe thioépoxy par g du polymère (A), et Ac le nombre de moles du groupe époxy- ou thioépoxy-réactif par g du polymère (A)) **caractérisé en ce que** l'on s'arrange pour que la température dans le dispositif de malaxage continu augmente continuellement de 40°C à 180°C.

**2.** Procédé selon la revendication 1, **caractérisé en ce que** l'on a obtenu le polymère (A) en chargeant un réacteur avec des composants monomères poly-mérisables dans des quantités telles que le polymère (A) à obtenir par polymérisation aura un nombre moyen de groupes époxy et/ou de groupes thioépoxy par molécule dans la gamme de 0,5 à 1,3, et en polymérisant les composants monomères polymérisables essentiellement en l'absence d'un groupe époxy- ou thioépoxy-réactif libre.

**3.** Procédé selon la revendication 1, **caractérisé en ce que** l'on a obtenu le polymère (A) en chargeant un réacteur avec des composants monomères poly-mérisables dans des quantités telles que le polymère (A) à obtenir par polymérisation aura un nombre moyen de groupes époxy et/ou de groupes thioépoxy par molécule dans la gamme approximative de 5 à 1,1, et en polymérisant les composants monomères polymérisables en présence d'un groupe époxy- ou thioépoxy-réactif libre nécessaire pour la consommation de groupes époxy et/ou groupes thioépoxy en excès.

**4.** Procédé selon l'une quelconque des revendications 1 à 3, **caractérisé en ce que** l'on utilise du noir de carbone possédant une valeur de pH ne dépassant pas 5.

**5.** Procédé selon l'une quelconque des revendications 1 à 4, **caractérisé en ce que** la quantité du polymère (A) à mélanger avec le noir de carbone est dans la gamme de 100 à 500 parties en poids, basée sur 100 parties en poids du noir de carbone.